# EUROPÄISCHE PATENTSCHRIFT

(11) **EP 0 471 325 B1**
(45) Veröffentlichungstag und Bekanntmachung des Hinweises auf die Patenterteilung: **12.04.1995**
(21) Anmeldenummer: 91113521.8
(22) Anmeldetag: 12.08.1991
(51) Int. Cl.: B60P 7/08

(54) **Befestigungsvorrichtung**
Fixing device
Dispositif de fixation

(30) Priorität: 17.08.1990 DE 4026157
(43) Veröffentlichungstag der Anmeldung: 19.02.1992
(73) Patentinhaber: S.E.S.R. - SOCIETE EUROPEENNE DE SEMI-REMORQUES, F-75008 Paris (FR)
(72) Erfinder: Franz, Carl, Dipl.-Ing., W-5600 Wuppertal 1 (DE)
(74) Vertreter: Alber, Norbert

(56) Entgegenhaltungen:
- DE-A- 3 933 673
- GB-A- 2 167 354
- US-A- 4 167 273

## Beschreibung

Die Erfindung betrifft eine Befestigungsvorrichtung gemäß dem Oberbegriff des Anspruchs 1, mit deren Hilfe Ladegut auf der Ladefläche eines Fahrzeuges mittels Spanngurten befestigt werden kann.

Aus der deutschen Patentanmeldung P 39 33 673 ist es bekannt, Verzurrungshaken, die mit den Zurrgurten verbunden sind, in ein entsprechend gestaltetes Außenrahmenprofil einzuhaken. Das Außenrahmenprofil weist zu diesem Zweck an der oberen, äußeren Kante einen Absatz auf und bildet in dem Absatz einen Rücksprung. In diesem Absatz sind Halter mit etwa waagerecht vorstehenden Nasen befestigt, welche von den Verzurrungshaken untergriffen werden.

Auch bei geschlossenen Bordwänden können die Verzurrungshaken bei entsprechender Winkelstellung aus den waagerecht vorstehenden Nasen entnommen bzw. in diese eingeführt werden. Die Verzurrungshaken sind daher nicht bei jeder zur Verfügung stehenden, haltenden Nase vorhanden, sondern werden nur bei Bedarf an den entsprechenden Stellen des Außenrahmenprofils eingesetzt.

Dies bringt den Nachteil mit sich, daß die Verzurrungshaken verloren werden können, bzw. bei Bedarf momentan nicht vorhanden sind.

Ein weiterer Nachteil liegt darin, daß die Verzurrungshaken ein in etwa L-förmiges Profil besitzen, und auch bei maximaler Belastung in Längsrichtung des langen Schenkels kein Aufbiegen des L-förmigen Profils auftreten darf.

Das L-förmige Profil muß daher entsprechend stark dimensioniert werden.

Desweiteren ist aus der US 41 67 273 eine Befestigungsvorrichtung an der Ladefläche eines Fahrzeuges bekannt, die ein Außenrahmenprofil, entlang dessen oberer und äußerer Kante ein Absatz angeordnet ist und das mit seinem obersten Bereich mit der Ebene der Ladefläche fluchtet, beinhaltet. Zur Befestigung von Zurrgurten oder dergleichen sind an dem Außenrahmenprofil Ösen montiert, die zwischen zwei Endstellungen bewegt werden können. Dabei ragen die Ösen in Ihrer ersten Endstellung über die Ebene der Ladefläche hinaus während sie in ihrer zweiten Endstellung nicht über die Ebene der Ladefläche hinaus ragen, so daß bei in der letztgenannten Endstellung befindlichen Ösen keine störenden Behinderungen beim Beladen des Fahrzeuges auftreten können. Die wenigstens einen Schenkel aufweisenden Ösen erstrecken sich in Ihrer nach unten hängenden Endstellung durch den Boden des Absatzes des Außenrahmenprofiles hindurch und sind gegen ein Herausziehen aus Ihrer oberen Endstellung gesichert. Nachteilig bei dieser bekannten Befestigungsvorrichtung wirkt sich aus, daß die Ösen zwischen den beiden Endstellungen durch Schwenken bewegt werden. Dabei entfernt sich das vom Absatz des Außenrahmenprofils abgewandte Ende der Ösen in horizontaler Richtung von der vertikalen Seitenwand des Außenrahmenprofils, so daß es z. B. nicht möglich ist, die Ösen in ihre obere Endstellung zum Verzurren der Ladung zu bringen, wenn sich das Fahrzeug mit der entsprechenden Fahrzeugseite sehr nahe an Mauern oder anderen Wandungen befindet. Somit müßte zum ordnungsgemäßen Verzurren der Ladung erneut rangiert werden.

Es ist daher die Aufgabe der vorliegenden Erfindung, die Nachteile des Standes der Technik zu vermeiden und insbesondere eine Befestigungsvorrichtung zu schaffen, bei der die Ösen zum Hindurchführen der Zurrgurte permanent am Fahrzeug vorhanden sind, bei Nichtbedarf jedoch in eine Position gebracht werden können, die Ladefläche und Ladevolumen des Fahrzeuges nicht negativ beeinflußt. Zusätzlich muß eine derartige Befestigungsvorrichtung einfach und billig herzustellen, insbesondere zu montieren, sein, wobei auch die Nachrüstung von Fahrzeugen möglich sein soll.

Diese Aufgabe wird durch die kennzeichnenden Merkmale des Anspruchs 1 gelöst. Vorteilhafte Ausführungsformen ergeben sich aus den Unteransprüchen.

Die Ladefläche eines Fahrzeuges, insbesondere eines LKWs, besteht in aller Regel aus in Abstand zueinander angeordneten, vertikalen Querträgern, die an ihren frei endenden Außenseiten über ein Außenrahmenprofil miteinander verbunden werden. Zwischen die begrenzenden Außenrahmenprofile werden meist Holzplatten oder ähnliches als Ladeboden eingelegt, deren oberer Abschluß mit dem oberen Abschluß des Außenrahmenprofils fluchtet und die Ebene der Ladefläche darstellt.

Das Außenrahmenprofil erstreckt sich außen an den freien Enden der Querträger herab in einem etwa senkrechten Bereich, und umgreift diese Querträger auf der Unterseite.

Eventuell am Fahrzeug vorhandene Bordwände oder seitliche Rungen sind an diesem senkrechten Bereich des Außenrahmenprofils befestigt.

Ebenso wie bei dem bekannten Gegenstand der Anmeldung P 39 33 673 ist auch hier das Außenrahmenprofil auf dem Niveau der Ebene der Ladefläche nicht bis zum äußeren Rand gezogen, sondern weist im Bereich der oberen, äußeren Kante einen Absatz auf. Dieser wird durch einen den Boden des Absatzes bildenden Bereich des Außenrahmenprofils sowie durch eine zum obersten Bereich des Außenrahmenprofils im Anschluß daran aufsteigende Wand des Außenrahmenprofils gebildet.

Die Ösen, an welchen Zurrgurte befestigt werden können, erstrecken sich teilweise durch Öffnungen im Boden des Absatzes und sind dort gesichert, so daß sie nicht vollständig vom Außenrahmenprofil getrennt werden können. Die Öse kann sich jedoch zwischen einer bis zum Anschlag aus dem Außenrahmenprofil herausgezogenen Position und einer soweit wie möglich hineingeschobenen Position hin und her bewegen, wobei die Öse im hineingeschobenen Zustand nicht über das Niveau der Ebene der Ladefläche hinausragen soll, um beim Be- und Entladen nicht zu behindern. Im hineingeschobenen Zustand liegt der oberhalb des Außenrahmenprofils befindliche Teil der Öse deshalb in dem Absatz.

Zum Zwecke des Verzurrens wird die Öse soweit als möglich aus dem Außenrahmenprofil hervorgezogen und an ihrem oberen Ende mit den Zurrgurten verbunden. Da die Zurrgurte von den Ösen aus immer nach oben und innen gerichtet sind, wird die Öse dadurch in Anlage an die Außenfläche der ansteigenden Wand der Rinne des Außenrahmenprofils gebracht. Weiterhin stützt sich das am weitesten in das Außenrahmenprofil hineinreichende Ende der Öse auf der Innenseite des Außenrahmenprofils ab.

Während einerseits der Absatz möglichst schmal gehalten werden soll, um zu verhindern, daß einzelne Teile der Ladung dort hineinrutschen etc., muß auf der anderen Seite bei herausgezogener, an der Wand des Absatzes anliegender Öse zwischen der Oberkante der Öse und der eventuell vorhandenen Bordwand ausreichend Raum sein, um beispielsweise auch einen Kranhaken oder ein anderes Befestigungsmittel hindurchführen zu können.

Zu diesem Zweck ist die aufsteigende Wand des Absatzes schräg nach oben und zur Fahrzeugmitte hin geneigt, so daß sich eine Schräglage der Öse ergibt und sich deren Abstand zur Bordwand von unten nach oben vergrößert.

Da die Öse Belastungen bis herunter zu einem Winkel von 30° zur Waagerechten aufnehmen können muß, muß die schräge Wand des Absatzes ebenfalls mindestens 30° gegenüber der Waagerechten steil sein, da ansonsten der Absatz zu breit wird und nicht mehr gewährleistet ist, daß die Öse bei allen vorkommenden Belastungsrichtungen immer am gleichen Punkt, nämlich im Bereich des oberen Endes der schrägen Wand, am Außenrahmenprofil anliegt.

Im Boden des Absatzes befindet sich wenigstens eine Öffnung, durch die die Öse mit wenigstens einem Schenkel hindurchgeschoben und dahinter gegen ein Zurückziehen gesichert werden kann.

Die Öse soll ferner im Hinblick auf die auftretenden Belastungen möglichst leicht und dennoch ausreichend stabil gestaltet werden.

Bei Herstellung der Öse aus beispielsweise einem Rundmaterial ist auf Grund der Belastungsverhältnisse am Berührungspunkt mit der Wand der größte Querschnitt vorzusehen.

Daher kann bei Wahl des Durchmessers des Rundmaterials für die Öse nach der Belastung am oberen Ende der Öse dieser Durchmesser zwischen dem Berührungspunkt mit der Wand und dem unteren Ende reduziert werden, ohne daß die Stabilität der Öse darunter leidet. Dies ermöglicht eine Verkleinerung der Größe der Öffnungen im Boden des Absatzes, durch welche sich die Öse hindurcherstrecken muß, und vor allem eine geringere Breite des Absatzes selbst .

Eine Durchmesserverminderung von etwa 25 % ist hier möglich. Die Reduzierung wird dabei so vorgenommen, daß sie nur in Blickrichtung der Fahrzeuglängsachse zu sehen ist.

Der Abstand des unteren Endes der Öse vom Berührungspunkt und weiter zum oberen Ende sollte dabei im herausgezogenen Zustand der Öse etwa 1/3 zu 2/3 betragen.

Die Öse wird aus einem Rundmaterial U-förmig gestaltet, und mit ihren freien Schenkeln von oben durch zwei im entsprechenden Abstand angeordnete Öffnungen im Boden des Absatzes durch das Außenrahmenprofil geschoben. Unterhalb des Außenrahmenprofils werden die freien Enden der U-förmigen Öse gegen ein Zurückziehen gesichert, indem durch die Enden der freien Schenkel entweder eine Spannhülse oder ein Gewindebolzen eingesetzt wird. Ebenso kann ein etwa C-förmiger Bügel jeweils von außen in eine Bohrung in den freien Enden der Schenkel der U-förmigen Öse hineingebogen werden, so daß in jedem Fall die Öse nur soweit nach oben gezogen werden kann, bis das Sicherungsteil an der Unterseite des den Boden des Absatzes bildenden Außenrahmenprofils anliegt.

Selbstverständlich können auf diese Art und Weise nur an solchen Stellen Ösen am Außenrahmenprofil befestigt werden, an denen kein Querträger vorhanden ist, da nur dann die Innenseite des Außenrahmenprofils zugänglich ist.

Um den Abstand zwischen dem Berührungspunkt und dem unteren Ende der Öse möglichst gering zu halten, wird beispielsweise auch die Höhe des Absatzes so klein wie möglich gehalten, muß auf der anderen Seite jedoch wenigstens so groß sein, daß der Querschnitt des quer verlaufenden, verbindenen Schenkels der z.B U-förmigen Öse bei eingeschobener Öse darin Platz findet, ohne nach oben über die Ebene der Ladefläche hinauszuragen.

Um die Längenverhältnisse zu optimieren, werden auch die Biegeradien des Außenrahmenprofiles so klein wie möglich gestaltet, vorzugsweise etwa 0,5 x der Materialstärke des Außenrahmenprofiles. Dadurch sitzt der Berührungspunkt zwischen Öse und Wand des Absatzes des Außenrahmenprofils möglichst weit in der Nähe der Ebene der Ladefläche und andererseits kann dadurch die Breite des Absatzes geringer gehalten werden, da die Öffnung nahe an den senkrechten, außen an den Querträgern entlang führenden Teil des Außenrahmenprofils herangebracht werden können.

Vorzugsweise werden die Öffnungen im Boden des Absatzes länglich gestaltet, also elliptisch oder als Langloch, und zwar mit dem großen Durchmesser in Richtung der Fahrzeuglängsachse, also der Außenkante der Ladefläche, und dem kleinen Durchmesser hierzu senkrecht. Dabei ist der große Durchmesser geringfügig größer zu wählen als die nicht reduzierte Dicke der frei endenden Schenkel der Öse, entsprechend der Verjüngung der Schenkel nur in richtung der Fahrzeuglängsachse. Dies ergibt trotz voller Bewegungsfreiheit für die Öse eine optimal kleine Querschnittsfläche für die einzelne Öffnung, wodurch die Steifigkeit des Außenrahmenprofils so wenig wie möglich beeinträchtigt wird und der Absatz möglichst schmal bleibt.

Das Außenrahmenprofil eines Fahrzeuges wird vorteilhafterweise in regelmäßigen Abständen mit Paaren von Öffnungen entlang einer parallel zur Außenkante verlaufenden Linie versehen sein, in welchen sich die U-förmigen, gegen Herausziehen gesicherten Ösen befinden.

Eine Ausführungsform gemäß der Erfindung ist im folgenden beispielhaft näher beschrieben.

Es zeigen:
- Fig. 1: eine Querschnittsdarstellung in Fahrzeuglängsrichtung durch das äußere Ende einer mit der Erfindung ausgestatteten Ladefläche eines Fahrzeuges,
- Fig. 2: eine Querschnittsdarstellung quer zur Fahrzeuglängsrichtung durch das äußere Ende einer mit der Erfindung ausgestatteten Ladefläche eines Fahrzeuges gemäß Fig. 1,
- Fig. 3: eine vergrößerte Darstellung gemäß Fig. 1,
- Fig. 4: eine Ansicht ähnlich der Fig. 3, jedoch mit vollständig in das Außenrahmenprofil (1) eingeschobener Öse (5), und
- Fig. 5: eine Ansicht gemäß Figur 1 bei einem Fahrzeug mit Kofferaufbau.

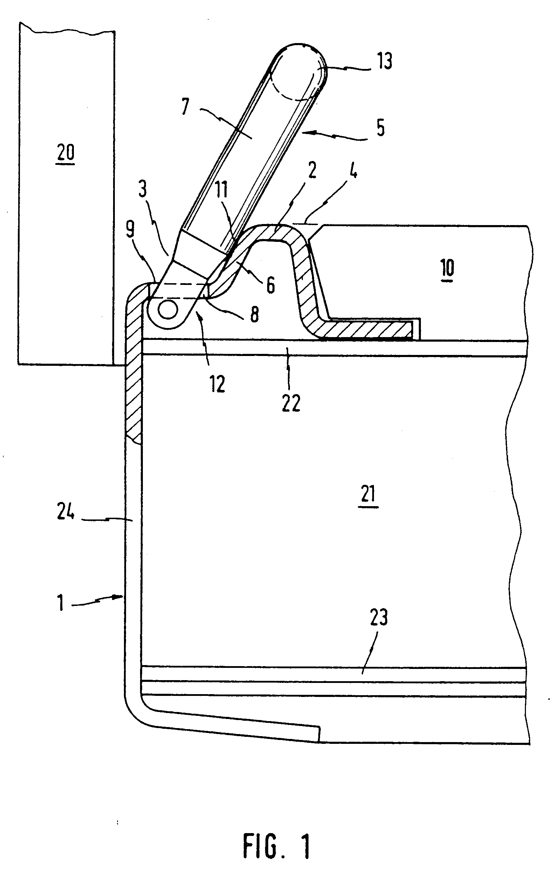

Fig. 1 zeigt den äußeren Rand der Ladefläche eines Fahrzeuges im Querschnitt. Dieser wird von mehreren Querträgern 21 getragen, der im vorliegenden Fall als Doppel-T-Träger ausgebildet ist. Das freie Ende der Querträger 21 wird von einem Außenrahmenprofil 1 umfaßt, welches teilweise auf dem oberen vertikalen Teil 22 der Querträger 21 aufliegt, sich mit einem senkrechten Bereich 24 außen am freien Ende der Querträger 21 entlang nach unten erstreckt und das untere vertikale Teil 23 des Querträgers 21 ebenfalls umgreift.

Dabei liegt das obere freie Ende des Außenrahmenprofils 1 mit einem waagerechten Bereich auf dem oberen Teil 22 des Querträgers 21 auf, wölbt sich von dort nach oben und geht in einen obersten Bereich 2 über, dessen Außenfläche zugleich die Ebene 4 der Ladefläche darstellt. Dieser oberste Bereich ist jedoch nicht waagerecht nach außen gezogen bis zur äußersten Kante der Ladefläche und zum Übergang in den senkrechten Bereich 24 des Außenrahmenprofils, sondern bereits vorher abgesenkt, so daß im Bereich der obersten, äußeren Kante des Außenrahmenprofils 1 ein Absatz 3 entsteht. Dieser wird durch den den Boden des Absatzes 3 bildenden, etwa waagerechten Bereich 9 des Außenrahmenprofils 1 gebildet, sowie die im Anschluß daran nach schräg oben und zum Fahrzeuginneren hin ansteigende Wand 6, die in den obersten Bereich 2 des Außenrahmenprofils 1 übergeht.

In den Absatz zwischen den obersten Bereich 2 des Außenrahmenprofils 1 und dessen auf dem oberen Teil 22 des Querträgers 21 aufliegenden Bereich am freien Ende des Außenrahmenprofils ist der Ladeboden 10 eingelegt, der meist aus Platten oder Holzbohlen besteht, und oben bündig mit der Ebene 4 der Ladefläche fluchtet.

Sofern eine Bordwand 20 vorhanden ist, ist diese Außen am senkrechten Bereich 24 des Außenrahmenprofils befestigt, welches üblicherweise mit den Querträgern 21 verschweißt ist. Gleiches gilt für seitlich angeordnete Rungen bzw. Laschen zu deren Befestigung.

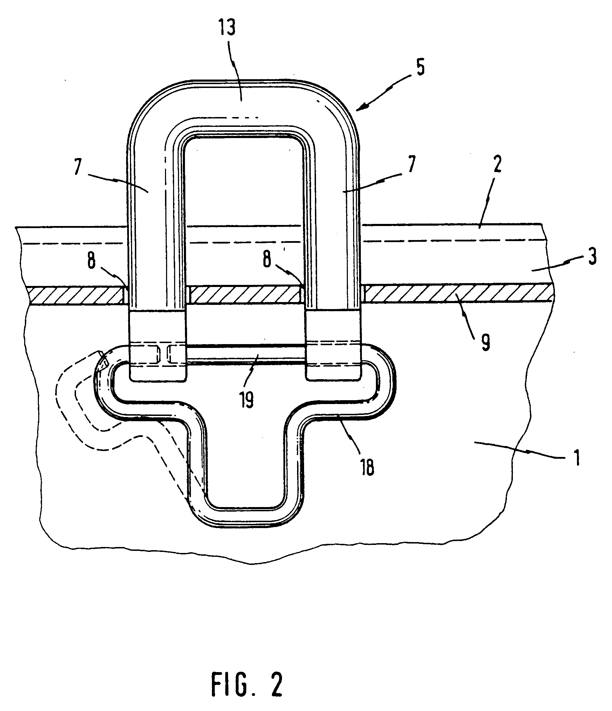

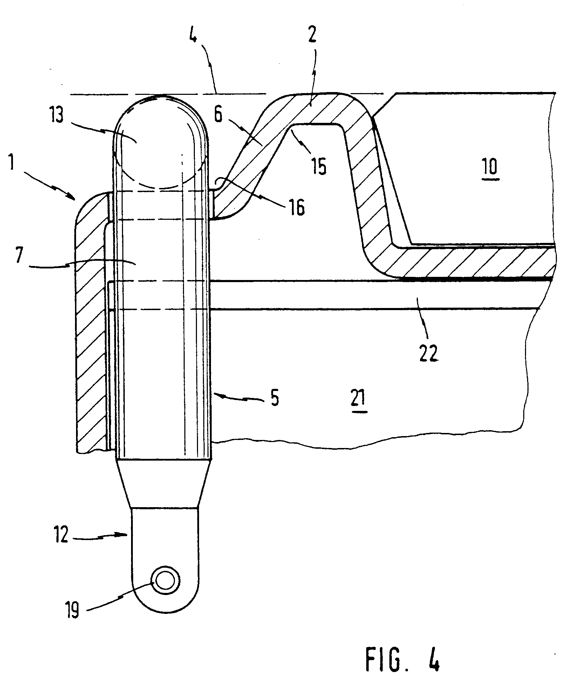

Der Absatz 3 ist im Außenrahmenprofil angeordnet, um im Bereich 9 des Bodens des Absatzes jeweils Paare von Öffnungen 8 anzubringen, durch die sich die U-förmigen Ösen 5, wie sie in Fig. 2 in der Frontansicht dargestellt sind, durch das Außenrahmenprofil 1 hindurchstecken zu können. Wenn diese Ösen 5 nicht zum Verzurren der Ladung benötigt werden, werden sie soweit als möglich in das Außenrahmenprofil 1 hineingeschoben, bis der verbindende Schenkel 13 der U-förmigen Öse 5 auf dem Boden des Absatzes 3 aufliegt, wie in Fig. 4 dargestellt, so daß die Öse 5 nicht über die Ebene 4 der Ladefläche hinausragt.

Somit muß der Absatz 3 mindestens so hoch sein, wie der Querschnitt des verbindenden Schenkels 13 der Öse 5, aber andererseits soll der Absatz 3 möglichst niedrig sein, um den senkrechten Bereich 24 des Außenrahmenprofils 1 möglichst wenig zu reduzieren.

Entlang des Außenrahmenprofils 1 sind bei einem Fahrzeug in regelmäßigen Abständen paarweise Öffnungen 8 angebracht, in denen sich Ösen 5 befinden. Diese werden montiert, indem sie mit ihren frei endenden Schenkeln 7 von oben durch die Öffnungen 8 durch das Außenrahmenprofil 1 gesteckt und auf der anderen Seite des Außenrahmenprofils 1 gesichert werden, so daß ein Herausziehen aus dem Außenrahmenprofil 1 nicht mehr möglich ist.

Dies ist natürlich nur an solchen Stellen des Außenrahmenprofils 1 möglich, an denen sich kein Querträger 21 mit seinem oberen und unteren Teil 22 bzw. 23 befindet, da dort das Innere des Außenrahmenprofils 1 nicht zugänglich ist.

Wie die Darstellung der Fig. 2 auf eine durch das Außenrahmenprofil 1 hindurchgesteckte Öse 5 in waagerechter Blickrichtung quer zur Fahrzeuglängsachse, bei entferntem senkrechten Bereich 24 des Außenrahmenprofiles, zeigt, kann die Sicherung auf unterschiedliche Art und Weise vorgenommen werden: Wenn sich in den freien Enden der Schenkel 7 der Öse 5 fluchtende Bohrungen befinden, so kann eine Spannhülse 19 mittels eines geeigneten Handwerkzeuges eingebracht werden. Ebenso kann ein etwa C-förmiger Bügel 18 auf einer Seite von außen in die Öffnung der Öse 5 eingesetzt und anschließend zusammengebogen werden, so daß auch das andere freie Ende des C-förmigen Bügels 18 in die andere Öffnung auf der gegenüberliegenden Außenseite der Öse 5 zu liegen kommt. Zu diesem Zweck ist der C-förmige Bügel 18 in seinem mittleren Bereich nochmals abgesetzt, so daß sich im zusammengebogenen Zustand eine Form ergibt, bei der sich von einem mittleren, größeren U-förmigen Profil aus jeweils an den freien Enden nochmals U-förmige Profile anschließen, deren freie Enden gegeneinander gerichtet sind und in den Bohrungen der Öse 5 zu liegen kommen.

Zur Montage ist der Bügel 18 um eine Ecke des mittleren U-förmigen Profiles herum noch nicht ganz zusammen gebogen. Nach Einsetzen in einen Schenkel der Öse 5 wird er vollständig zusammengebogen, mit definitiv bekanntem Biegepunkt, sodaß er mit seinem anderen Ende ohne Verspannung im anderen Schenkel der Öse 5 zu liegen kommt.

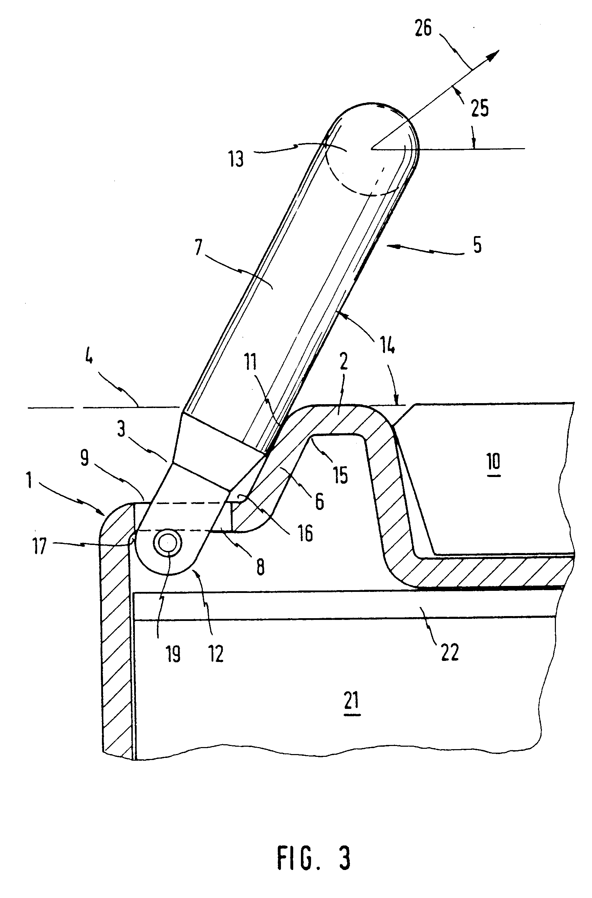

Die ganze Vorrichtung soll möglichst leicht und dennoch ausreichend stabil gestaltet werden, wobei insbesondere auf geringe Breite des Abstzes 3 und geringe Größe der Öffnungen 8 Wert gelegt wird. Die Zurrgurte greifen an der Öse in der in Fig. 3 eingezeichneten Richtung 26 an, wobei der Winkel 25 zwischen der Angriffsrichtung und der Waagerechten zwischen 90 und 30° betragen kann.

Die Auslegung der Öse 5 sowie der sichernden Spannhülse 19 im Hinblick auf reine Zugbelastung der SChenkel 7 bereitet keine rechnerischen Probleme. Um sicherzustellen, daß die Öse 5 nur ausschließlich auf Zug belastet werden kann, müßte somit die Wand 6 des Außenrahmenprofils 1 flacher als 30° zur Waagerechten liegen, was einen sehr breiten Absatz 3 ergeben würde und zusätzlich, für den Fall, daß die Angriffsrichtung 26 versehentlich noch flacher gewählt wird, dennoch zu einem Anliegen der Öse 5 an der Wand 6 führen. Um dies zu vermeiden, ist die Wand 6 steiler als 30° gewählt und der Rundungsradius zwischen der Wand 6 und dem obersten Bereich 2 möglichst klein gewählt, so daß sich im belasteten Zustand der Öse 5 ein immer gleicher, bekannter Berührungspunkt 11 zwischen dem Schenkel 7 der Öse 5 und dem oberen Bereich der Wand 6 des Außenrahmenprofils 1 ergibt. Dadurch ergibt sich eine Biegebelastung der Schenkel 7, die vom Berührungspunkt 11 aus in beide Richtungen der Schenkel 7 abnimmt, und wegen des größeren Abstandes zum oberen Ende der Öse 5 im Bereich des Berührungspunktes 11 am größten ist. Da der Abstand des inneren Endes 12 der Schenkel 7 vom Berührungspunkt 11 kleiner ist, nimmt an diesem Ende auch die Biegebelastung schneller ab, so daß im Bereich zwischen dem Berührungspunkt 11 und dem inneren freien Ende 12 der Schenkel 7 eine Verjüngung der Schenkel 7 vorgenommen ist. Im vorliegenden Fall wird hier der Durchmesser in Blickrichtung der Figur 1 um etwa 25% durch einen schrägen Übergang verringert. In Blickrichtung der Figur 2 ist der Querschnitt der Schenkel 7 der Öse 5 nicht verringert, um eine große Breite für das eingebrachte Sicherungselement in den freien Enden der Schenkel 7 zu Verfügung zu haben.

In der Praxis ergibt sich am besten eine Lage des Berührungspunktes 11, die im Verhältnis von etwa 1/3 zu 2/3 zwischen dem inneren Ende 12 und dem verbindenden Schenkel 13 der Öse 5 liegt.

Diese Verjüngung der Schenkel 7 bietet den Vorteil, daß damit der Absatz 3 schmaler gehalten werden kann und auch die Öffnungen 8 kleiner dimensioniert werden können. Diese müssen natürlich mindestens so groß sein, wie der Querschnitt der Schenkel 7 im nicht verjüngten Bereich, um ein vollständiges Einschieben der Ösen 5 in die in Fig. 4 dargestellte Stellung zu ermöglichen. Andererseits wird die Größe der Öffnungen 8 jedoch durch den Querschnitt der Öse 5 am Durchtritt der Öffnungen 8 im herausgezogenen Zustand, und zwar in der notwendigen Schrägstellung der Öse 5, festgelegt. Bei einem verjüngten unteren Ende der Schenkel 7 reicht trotz der Schrägstellung der Öse 5 im verspannten Zustand eine Größe der Öffnung 8 entsprechend dem nicht reduzierten Durchmesser der Schenkel 7 aus. Je kleiner die Öffnungen 8 dimensioniert werden können, um so weniger wird dadurch die Stabilität des Außenrahmenprofils 1 beeinträchtigt, so daß die Materialstärke des Außenrahmenprofils 1 reduziert werden kann, was wiederum hohe Gewichtseinsparungen mit sich bringt.

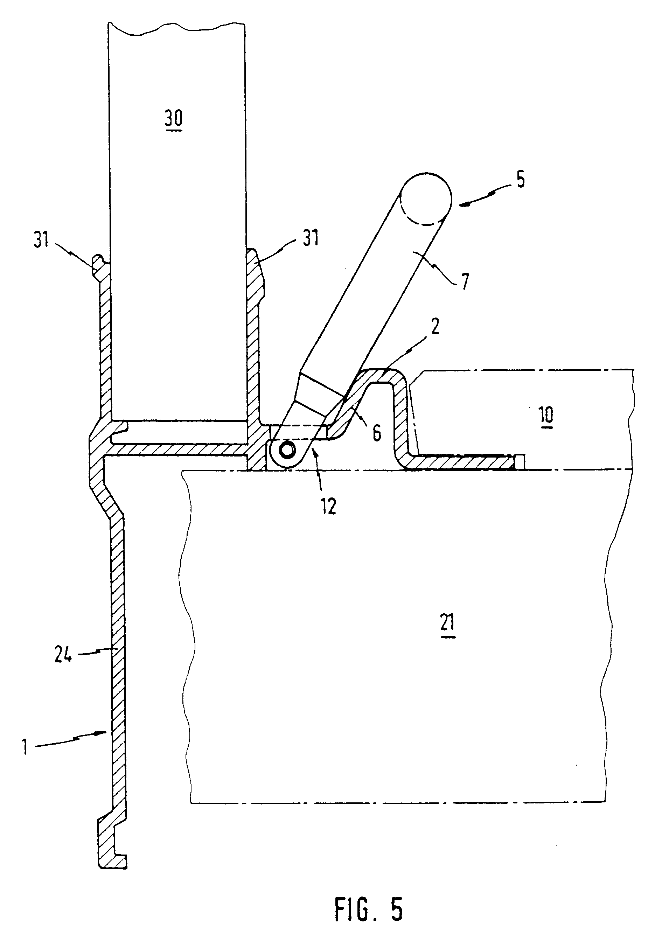

Figur 5 zeigt eine Ansicht gemäß Figur 1, wobei das Außenrahmenprofil 1 speziell im Hinblick auf feste Kofferaufbauten gestaltet ist und zu diesem Zweck im Bereich der oberen, äußersten Kante zwei im Abstand nach oben ragende Fortsätze 31 aufweist, die die Wand 30 des Aubaues aufnehmen. Erst danach erfolgt der Abfall des Außenrahmenprofiles 1 in den senkrechten Bereich 24.

## Patentansprüche

1. Befestigungsvorrichtung an der Ladefläche eines Fahrzeuges zum Befestigen von Zurrgurten für die Ladung mit
- einem Außenrahmenprofil (1), welches an der oberen, äußeren Kante einen Absatz (3) bildet und mit seinem obersten Bereich (2) mit der Ebene (4) der Ladefläche fluchtet, und
- an dem Außenrahmenprofil (1) montierten Ösen (5), welche zwischen zwei Endstellungen bewegt werden können, wobei in ihrer ersten Endstellung die Ösen (5) über die Ebene (4) der Ladefläche hinausragen und das Anbringen von Zurrgurten ermöglichen und wobei in ihrer zweiten Endstellung die Ösen (5) nicht mehr über die Ebene (4) der Ladefläche hinausragen, wobei
- jede Öse (5) sich mit wenigstens einem Schenkel (7) durch wenigstens eine Öffnung (8) im Bereich (9) des Bodens des Absatzes (3) des Außenrahmenprofiles (1) hindurcherstreckt, wenn sie sich in der zweiten Endstellung befindet, und gegen ein Herausziehen aus der ersten Endstellung gesichert ist,
**dadurch gekennzeichnet**, **daß**
- die zum obersten Bereich (2) des Außenrahmenprofiles (1) aufsteigende Wand (6) des Absatzes (3) schräg, zur Fahrzeugmitte hin geneigt, ansteigt,
- jede Öse (5) durch Einschieben und Herausziehen ihres bzw. ihrer Schenkel (7) durch die Öffnung (8) zwischen den beiden Endstellungen bewegt wird, und
- bei bis zum Anschlag aus dem Außenrahmenprofil (1) herausgezogenener Öse (5) sich der bzw. die Schenkel (7) vom Berührungspunkt (11) mit der Wand (6) in Richtung auf sein bzw. seine innerhalb des Außenrahmenprofils (1) liegendes bzw. liegenden Ende bzw. Enden (12) verjüngt.

2. Befestigungsvorrichtung nach Anspruch 1,
**dadurch gekennzeichnet**, **daß**
der Absatz (3) einen Querschnitt besitzt, der ausreicht, daß in der zweiten Endstellung der Öse (5) deren oberhalb des Außenrahmenprofiles (1) liegende Teile unterhalb der Ebene (4) der Ladefläche zu liegen kommen.

3. Befestigungsvorrichtung nach Anspruch 1 oder 2,
**dadurch gekennzeichnet**, **daß**
die Öse (5) U-förmig gestaltet ist, wobei sich der verbindende Schenkel (13) außerhalb des Außenrahmenprofils (1) befindet und die beiden frei endenden Schenkel (7) durch zwei Öffnungen (8) in das Innere des Außenrahmenprofils (1) ragen.

4. Befestigungsvorrichtung nach einem der vorhergehenden Ansprüche,
**dadurch gekennzeichnet**, **daß**
der Winkel (14) zwischen der Außenseite der Wand (6) und der Ebene (4) der Ladefläche größer oder gleich 30°, insbesondere 65° beträgt.

5. Befestigungsvorrichtung nach einem der vorhergehenden Ansprüche,
**dadurch gekennzeichnet**, **daß**
die Verjüngung der Schenkel (7), bezogen auf den Durchmesser, etwa 25% beträgt.

6. Befestigungsvorrichtung nach Anspruch 5,
**dadurch gekennzeichnet**, **daß**
die Verjüngung der Schenkel (7) in Richtung der Fahrzeuglängsachse erfolgt.

7. Befestigungsvorrichtung nach einem der vorhergehenden Ansprüche,
**dadurch gekennzeichnet**, **daß**
die Länge der Schenkel (7) so bemessen ist, daß etwa 2/3 oberhalb und 1/3 unterhalb des Berührungspunktes (11) zwischen der Wand (6) und den Schenkeln (7) bei in der ersten Endstellung befindlicher Öse (5) liegen.

8. Befestigungsvorrichtung nach einem der vorhergehenden Ansprüche,
**dadurch gekennzeichnet**, **daß**
die Höhe des Absatzes (3) so gering wie möglich ist, insbesondere nur etwa dem Durchmesser des verbindenden Schenkels (13) der Öse (5) entspricht.

9. Befestigungsvorrichtung nach einem der vorhergehenden Ansprüche,
**dadurch gekennzeichnet**, **daß**
die Innenradien (15, 16 und 17) des Außenrahmenprofiles (1) am Übergang vom obersten Bereich (2) zur Wand (6) bzw. der Wand (6) zum Boden (9) bzw. vom Boden (9) zum senkrechten Bereich (24) im wesentlichen das 0,5-fache der Materialdicke des Außenrahmenprofils (1) betragen.

10. Befestigungsvorrichtung nach einem der Ansprüche 3 bis 8,
**dadurch gekennzeichnet**, **daß**
die Sicherung gegen das Herausziehen der Öse (5) aus der ersten Endstellung eine Spannhülse (19) ist, die durch fluchtende Bohrungen in den inneren Enden (12) der Schenkel (7) sitzt.

11. Befestigungsvorrichtung nach einem der Ansprüche 3 bis 9,
**dadurch gekennzeichnet**, **daß**
die Sicherung gegen das Herausziehen der Öse (5) aus der ersten Endstellung ein C-förmiger Bügel (18) ist, dessen nach innen gerichtete freie Enden in Ausnehmungen auf den Außenseiten der inneren Enden (12) der Schenkel (7) angeordnet sind.

12. Befestigungsvorrichtung nach einem der Ansprüche 3 bis 9,
**dadurch gekennzeichnet**, **daß**
die Sicherung gegen das Herausziehen der Öse (5) aus der ersten Endstellung ein durch die freien Enden der Schenkel (7) geschraubter Gewindebolzen ist.

13. Befestigungsvorrichtung nach einem der Ansprüche 3 bis 9,
**dadurch gekennzeichnet**, **daß**
die Öffnungen (8) rund ausgebildet sind.

14. Befestigungsvorrichtung nach einem der vorhergehenden Ansprüche,
**dadurch gekennzeichnet**, **daß**
die Öffnungen (8) elliptisch geformt sind, und deren langer Durchmesser parallel zur Längsrichtung des Außenrahmenprofils (1) liegt.

15. Befestigungsvorrichtung nach einem der vorhergehenden Ansprüche,
**dadurch gekennzeichnet**, **daß**
die Öffnungen (8) als Langlöcher ausgebildet sind, mit ihrer Längsachse parallel zur Längsachse des Fahrzeuges.

16. Befestigungselement nach einem der vorhergehenden Ansprüche,
**dadurch gekennzeichnet**, **daß**
das Außenrahmenprofii (1) in regelmäßigen Abständen paarweise Öffnungen (8) im Boden des Absatzes (3) aufweist.

## Claims

1. A fixing device on the loading surface of a vehicle for fixing lashing straps for the loading, having
- an outer frame profile (1) which an the upper outer edge forms a shoulder (3) and with its upper region (2) is flush with the plane (4) of the loading surface, and
- loops (5) mounted on the outer frame profile (1), which can be moved between two end positions, wherein in their first end position the loops (5) protrude beyond the plane (4) of the loading surface and render possible the attachment of lashing straps and wherein in their second end position the loops (5) no longer protrude beyond the plane (4) of the loading surface, wherein
- each loop (5) extends with at least one limb (7) through at least one opening (8) in the region (9) of the base of the shoulder (3) of the outer frame profile (1) when it is located in the second end position, and is secured against being pulled out of the first end position,
characterised in that
- the wall (6) of the shoulder (3), extending to the uppermost region (2) of the outer frame profile (1), rises in an inclined manner diagonally towards the middle of the vehicle,
- each loop (5) is moved between the two end positions by pushing in and pulling out its limb or limbs (7) through the opening (8), and
- when the loop (5) is pulled out from the outer frame profile (1) as far as the shoulder, the limb or limbs (7) taper from the contact point (11) with the wall (6) in the direction towards its end or ends (12) lying inside the outer frame profile (1).

2. A fixing device according to claim 1, characterised in that the shoulder (3) has a cross-section which is sufficient so that, in the second end position of the loop (5), the parts thereof lying above the outer frame profile (1) come to lie below the plane (4) of the loading surface.

3. A fixing device according to claim 1 or 2, characterised in that the loop (5) is formed in a U shape wherein the connecting limb (13) is located outside the outer frame profile (1) and the two freely ending limbs (7) protrude through two openings (8) into the inside of the outer frame profile (1).

4. A fixing device according to any of the preceding claims, characterised in that the angle (14) between the outer side of the wall (6) and the plane (4) of the loading surface is greater than or equal to 30°, in particular 65°.

5. A fixing device according to any of the preceding claims, characterised in that the tapering of the limbs (7) with respect to the diameter amounts to approximately 25%.

6. A fixing device according to claim 5, characterised in that the tapering of the limbs (7) is achieved in the direction of the longitudinal axis of the vehicle.

7. A fixing device according to any of the preceding claims, characterised in that the length of the limbs (7) is dimensioned in such a way that approximately 2/3 lies above and 1/3 lies below the contact point (11) between the wall (6) and the limbs (7) when the loop (5) is located in the first end position.

8. A fixing device according to any of the preceding claims, characterised in that the height of the shoulder (3) is as small as possible, in particular corresponding only to approximately the diameter of the connecting limb (13) of the loop (5).

9. A fixing device according to any of the preceding claims, characterised in that the inner radii (15, 16 and 17) of the outer frame profile (1) at the transition from the uppermost region (2) to the wall (6) or the wall (6) to the base (9) or from the base (9) to the vertical region (24) substantially amount to 0.5 times the material thickness of the outer frame profile (1).

10. A fixing device according to any of claims 3 to 8, characterised in that the device securing against the loop (5) being pulled out of the first end position is a clamping collet (19) which is located through aligned bores in the inner ends (12) of the limbs (7).

11. A fixing device according to any of claims 3 to 9, characterised in that the device securing against the loop (5) being pulled out of the first end position is a C-shaped clamp (18) of which the inwardly directed free ends are disposed in recesses on the outer sides of the inner ends (12) of the limb (7).

12. A fixing device according to any of claims 3 to 9, characterised in that the device securing against the loop (5) being pulled out of the first end position is a threaded bolt screwed through the free ends of the limbs (7).

13. A fixing devise according to any of claims 3 to 9, characterised in that the openings (8) are formed round.

14. A fixing device according to any of the preceding claims, characterised in that the openings (8) are formed elliptically and the longer diameter thereof lies parallel to the longitudinal direction of the outer frame profile (1).

15. A fixing device according to any of the preceding claims, characterised in that the openings (8) are formed as longitudinal holes, with their longitudinal axis parallel to the longitudinal axis of the vehicle.

16. A fixing device according to any of the preceding claims, characterised in that the outer frame profile (1) comprises pairs of openings (8) at regular distances in the base of the shoulder (3).

## Revendications

1. Dispositif de fixation monté sur la surface de chargement d'un véhicule et destiné à la fixation de sangles d'arrimage du chargement, comprenant
- un profilé de cadre extérieur (1) qui, au niveau de son bord extérieur supérieur, forme un décrochement (3) et dont la zone la plus haute (2) se trouve dans l'alignement du plan (4) de la surface de chargement, et
- des anneaux (5) qui sont montés sur le profilé de cadre extérieur (1) et peuvent être déplacés entre deux positions extrêmes, les anneaux (5) dépassant, dans leur première position extrême, au-dessus du plan (4) de la surface de chargement et permettant de passer des sangles d'arrimage, et les anneaux (5) ne dépassant plus, dans leur seconde position extrême, au-dessus du plan (4) de la surface de chargement,
- chaque anneau (5) traversant, par l'intermédiaire d'au moins l'une de ses branches (7), au moins une ouverture (8) ménagée dans la zone (9) du fond du décrochement (3) du profilé de cadre extérieur (1) lorsqu'il se trouve dans la seconde position extrême, et étant fixé pour l'empêcher de sortir lorsqu'il est dans la première position extrême,
caractérisé en ce que
- la paroi (6) du décrochement (3) qui monte jusqu'à la zone la plus haute (2) du profilé de cadre extérieur (1) s'élève en biais avec une inclinaison en direction du centre du véhicule,
- chaque anneau (5) est déplacé entre les deux positions extrêmes, en rentrant et en sortant sa ou ses branches (5) par l'ouverture (8), et
- lorsque l'anneau (5) est sorti du profilé de cadre extérieur (1) jusqu'à la position de butée, la ou les branches (7) se rétrécissent à partir du point (11) de contact avec la paroi (6) en direction de son ou ses extrémités (12) situées à l'intérieur du profilé de cadre extérieur (1).

2. Dispositif de fixation selon la revendication 1, caractérisé en ce que le décrochement (3) possède une section transversale suffisante pour que, lorsque l'anneau (5) se trouve dans la seconde position extrême, ses parties situées au-dessus du profilé de cadre extérieur (1) se trouvent en dessous du plan (4) de la surface de chargement.

3. Dispositif de fixation selon la revendication 1 ou 2, caractérisé en ce que l'anneau (5) présente la forme d'un U, la branche de liaison (13) se trouvant à l'extérieur du profilé de cadre extérieur (1) et les deux branches (7) à extrémités libres pénétrant à l'intérieur du profilé de cadre extérieur (1) par deux ouvertures (8).

4. Dispositif de fixation selon l'une des revendications précédentes, caractérisé en ce que l'angle (14) entre la face extérieure de la paroi (6) et le plan (4) de la surface de chargement est supérieur ou égal à 30° et, en particulier, est égal à 65°.

5. Dispositif de fixation selon l'une des revendications précédentes, caractérisé en ce que le rétrécissement des branches (7) correspond à environ 25 % du diamètre.

6. Dispositif de fixation selon la revendication 5, caractérisé en ce que le rétrécissement des branches (7) s'effectue en direction de l'axe longitudinal du véhicule.

7. Dispositif de fixation selon l'une des revendications précédentes, caractérisé en ce que la longueur des branches (7) est calculée pour que, lorsque l'anneau (5) est dans la première position extrême, environ 2/3 se trouvent au-dessus du point (11) de contact entre la paroi (6) et les branches (7) et pour qu'environ 1/3 se trouve en dessous.

8. Dispositif de fixation selon l'une des revendications précédentes, caractérisé en ce que la hauteur du décrochement (3) est aussi réduite que possible et, en particulier, ne correspond sensiblement qu'au diamètre de la branche de liaison (13) de l'anneau (5).

9. Dispositif de fixation selon l'une des revendications précédentes, caractérisé en ce que les rayons intérieurs (15, 16 et 17) du profilé de cadre extérieur (1) aux points de transition entre la zone la plus haute (2) et la paroi (6), entre la paroi (6) et le fond (9), et entre le fond (9) et la zone verticale (24) correspondent environ à la moitié de l'épaisseur du matériau du profilé de cadre extérieur (1).

10. Dispositif de fixation selon l'une des revendications 3 à 8, caractérisé en ce que le moyen de fixation empêchant l'anneau (5) de sortir lorsqu'il est dans la première position extrême est une douille de serrage (19) qui repose dans des perçages alignés pratiqués dans les extrémités intérieures (12) des branches.

11. Dispositif de fixation selon l'une des revendications 3 à 9, caractérisé en ce que le moyen de fixation empêchant l'anneau (5) de sortir lorsqu'il est dans la première position extrême est un étrier (18) en forme de C dont les extrémités libres dirigées vers l'intérieur sont disposées dans des évidements situés sur les faces extérieures des extrémités intérieures (12) des branches (7).

12. Dispositif de fixation selon l'une des revendications 3 à 9, caractérisé en ce que le moyen de fixation empêchant l'anneau (5) de sortir lorsqu'il est dans la première position extrême est un goujon fileté vissé dans les extrémités libres des branches (7).

13. Dispositif de fixation selon l'une des revendications 3 à 9, caractérisé en ce que les ouvertures (8) sont de forme ronde.

14. Dispositif de fixation selon l'une des revendications précédentes, caractérisé en ce que les ouvertures (8) sont de forme elliptique et leur grand diamètre est parallèle à la direction longitudinale du profilé de cadre extérieur (1).

15. Dispositif de fixation selon l'une des revendications précédentes, caractérisé en ce que les ouvertures (8) sont conçues sous la forme de trous oblongs dont l'axe longitudinal est parallèle à l'axe longitudinal du véhicule.

16. Elément de fixation selon l'une des revendications précédentes, caractérisé en ce que le profilé de cadre extérieur (1) comporte des ouvertures (8) pratiquées par paires à intervalles réguliers dans le fond du décrochement (3).
